# EUROPEAN PATENT SPECIFICATION

(11) **EP 0 745 501 B1**
(45) Date of publication and mention of the grant of the patent: **15.03.2000**
(21) Application number: 96107253.5
(22) Date of filing: 08.05.1996
(51) Int. Cl.: B60K 20/08

(54) **A device for positioning correctly an automobile gear lever**
Vorrichtung zur korrekten Positionierung eines Schalthebels eines Kraftfahrzeugs
Dispositif pour le positionnement correct d'un levier de changement de vitesse pour véhicule automobile

(30) Priority: 02.06.1995 IT TO950132 U
(43) Date of publication of application: 04.12.1996
(73) Proprietor: FIAT AUTO S.p.A., 10135 Torino (IT)
(72) Inventor: Di Giusto, Nevio, 10100 Torino to (IT)
(74) Representative: Di Francesco, Gianni

(56) References cited:
- EP-A- 0 464 923
- EP-A- 0 560 134
- PATENT ABSTRACTS OF JAPAN vol. 011, no. 178 (P-584), 9 June 1987 & JP 62 008210 A (KEIHIN SEIMITSU KOGYO KK), 16 January 1987,

## Description

The present invention refers to a device for positioning correctly an automobile gear lever, in particular a gear lever connected to flexible cables for selecting and engaging gears.

Gear control assemblies of the above kind can be located in several positions within the vehicle compartment as they are no longer bound by rigid rods that used to limit design possibilities.

The most recent tendency is to locate the gear lever on the dashboard near the steering wheel so as to facilitate manoeuvring thereof.

As the position of the steering wheel of most cars of medium and upper class is adjustable, also the gear lever requires an adjusting device such that the driver can adapt the lever position suitably, in accordance with the position of the steering wheel. EP-A-0 464 923 discloses a device for adjusting and stably positioning a gear-shift lever. However, this device can be adjusted only in one direction.

It is an object of the present invention to provide a simple and cost-effective device for adjusting the gear lever in the required position. It is desired to propose such a device which is reliable and easily adaptable to any model of car.

The above and further objects which will be more apparent hereinafter are attained according to the present invention by the provision of a device for positioning correctly a gear lever, in particular a gear lever connected to flexible push-pull cables for transmitting selecting and engaging movements to the gearshift, comprising a seat for supporting said lever, and characterised in that it consists of a tubular element connected to said seat and adapted to slide axially and rotate in a bracket, said bracket being fixed for rotation with a member integral with the vehicle body.

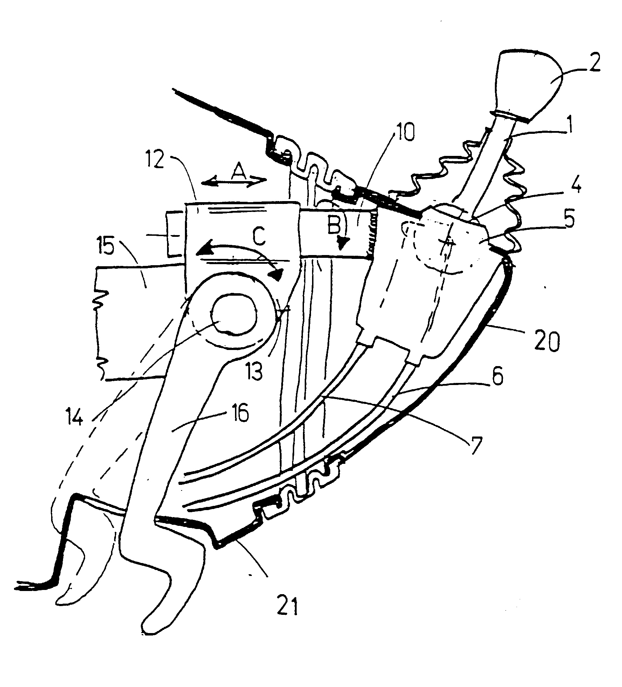

For a better understanding of the present invention, reference is made to the following detailed description of an exemplary embodiment considered in combination with the accompanying drawing, which illustrates a partially sectioned device in accordance with the invention.

With reference to the drawing, numeral 1 designates a gear shift lever for a motor vehicle. One end of lever 1 is fitted with a handling knob 2. The other end of lever 1 is provided with a ball 4 inserted in a seat 5 allowing movement in two perpendicular planes. This end is also provided with connections (not shown) to flexible cables 6 and 7 for selecting and engaging gears, respectively.

According to the present invention, seat 5 is provided with a tubular element 10 adapted to slide along and rotate about its axis in a reverse U-shaped bracket 12. The ends 13 of bracket 12 are crossed by a threaded axle 14 borne by a protruding portion of the dashboard 15. Threaded axle 14 is manoeuvred by a handle 16 for tightening the ends 13 of bracket 12 one toward the other such to hold the tubular element 10 within the bracket in the desired position.

Also, bracket 12 is free to rotate on its ends 13 about axle 14. The position of bracket 12 is fixed through handle 16 owing to the clamping action it exerts on tubular element 10.

In this way, on releasing the axle 14 through handle 16, the bracket can rotate as indicated by arrow C in the drawing, whereas tubular element 10 can slide in the direction of arrow A and rotate in the direction of arrow B. This enables lever 1 to be located in the most comfortable position for the driver.

A rubber guard 20 connected to a more rigid base 21 serves to hide the device of this invention.

## Claims

1. A device for positioning correctly a gear lever (1), in particular a gear lever connected to flexible push-pull cables (6, 7) for transmitting selecting and engaging movements to the gearshift, comprising a seat (5) for supporting said lever, and characterised in that said seat (5) is connected to a tubular element (10) and adapted to slide axially and rotate in a bracket (12), said bracket (12) being rotatably borne by a member (15) integral with the vehicle body, said tubular element (10) and the bracket (12) being clamped in a desired position.

2. A device as claimed in claim 1, characterised in that movement of said bracket (12) is controlled by a threaded axle (14) supported by said member (15) integral with the vehicle body.

3. A device as claimed in claim 1, characterised in that the bracket has a reverse U-shape.

4. A device as claimed in claims 1 and 3, characterised in that the ends (13) of the bracket (12) are crossed by said threaded axle (14) which is adapted for tightening said ends one towards the other so as to clamp said tubular element (10).

5. A device as claimed in claim 1, characterised in that the threaded axle (14) is connected to a manoeuvring handle (16).

## Patentansprüche

1. Vorrichtung zur korrekten Positionierung eines Schalthebels (1), insbesondere eines Schalthebels, der mit flexiblen Gegentaktkabeln (6, 7) zum Übertragen von Wähl- und Schaltbewegungen zur Gangschaltung verbunden ist, umfassend einen Sitz (5) zum Unterstützen des Hebels,
dadurch gekennzeichnet,
daß der Sitz (5) mit einem röhrenförmigen Element (10) verbunden ist und zum axialen Gleiten und Drehen in einer Klammer (12) geeignet ist, wobei die Klammer (12) drehend von einem Element (15) gestützt wird, das einstückig mit der Fahrzeugkarosserie verbunden ist, wobei das röhrenförmige Element (10) und die Klammer (12) in einer gewünschten Position festgeklemmt sind.

2. Vorrichtung nach Anspruch 1,
dadurch gekennzeichnet,
daß die Bewegung der Klammer (12) durch einen Gewindebolzen (14) gesteuert wird, der von dem Element (15) gestützt wird, das einstückig mit der Fahrzeugkarosserie verbunden ist.

3. Vorrichtung nach Anspruch 1,
dadurch gekennzeichnet,
daß die Klammer eine umgekehrte U-Form aufweist.

4. Vorrichtung nach den Ansprüchen 1 und 3,
dadurch gekennzeichnet,
daß die Enden (13) der Klammer (12) durch den Gewindebolzen (14) gekreuzt werden, der dazu geeignet ist, die Enden gegeneinander zusammenzuziehen, um das röhrenförmige Element (10) einzuklemmen.

5. Vorrichtung nach Anspruch 1,
dadurch gekennzeichnet,
daß der Gewindebolzen (14) mit einem Bedienungsgriff (16) versehen ist.

## Revendications

1. Dispositif permettant de positionner correctement un levier de changement de vitesse (1), en particulier un levier de changement de vitesse relié à des câbles souples à va-et-vient (6, 7) destinés à transmettre des mouvements de sélection et de mise en prise au changement de vitesse, comprenant un siège (5) destiné à supporter ledit levier, et caractérisé en ce que ledit siège (5) est relié à un élément tubulaire (10) qui est conçu pour coulisser axialement et pivoter dans un support (12), ledit support (12) étant supporté avec possibilité de pivotement par un élément (15) solidaire de la carrosserie de véhicule, ledit élément tubulaire (10) et le support (12) étant serrés dans une position souhaitée.

2. Dispositif selon la revendication 1, caractérisé en ce que le déplacement dudit support (12) est commandé par un axe fileté (14) supporté par ledit élément (15) solidaire de la carrosserie du véhicule.

3. Dispositif selon la revendication 1, caractérisé en ce que le support présente une forme de U inversé.

4. Dispositif selon les revendications 1 et 3, caractérisé en ce que les extrémités (13) du support (12) sont traversées par ledit axe fileté (14) qui est conçu pour serrer lesdites extrémités l'une vers l'autre de manière à serrer ledit élément tubulaire (10).

5. Dispositif selon la revendication 1, caractérisé en ce que l'axe fileté (14) est relié à une manette de manoeuvre (16).
